Europäisches Patentamt

**European Patent Office**

**Office européen des brevets**

(19)

(11) Veröffentlichungsnummer: **0 023 480**
**B1**

(12) **EUROPÄISCHE PATENTSCHRIFT**

(45) Veröffentlichungstag der Patentschrift:
05.05.82

(51) Int. Cl.³: **F 02 D 1/16**

(21) Anmeldenummer: **80890082.3**

(22) Anmeldetag: **22.07.80**

(54) Spritzversteller für Brennstoffeinspritzpumpen von Einspritzbrennkraftmaschinen.

| | |
|---|---|
| (30) Priorität: **27.07.79 AT 5207/79** | (73) Patentinhaber: **Friedmann & Maier Aktiengesellschaft, Friedmannstrasse 7, A-5400 Hallein bei Salzburg (AT)** |
| (43) Veröffentlichungstag der Anmeldung:<br>**04.02.81 Patentblatt 81/5** | (72) Erfinder: **Stipek, Theodor, Dipl.Ing., Gamperstrasse 15, A-5400 Hallein (AT)** |
| (45) Bekanntmachung des Hinweises auf die Patenterteilung:<br>**05.05.82 Patentblatt 82/18** | (74) Vertreter: **Kretschmer, Adolf, Dipl.-Ing., Schottengasse 3a, A-1014 Wien (AT)** |
| (84) Benannte Vertragsstaaten:<br>**DE FR GB IT SE** | |
| (56) Entgegenhaltungen:<br>**AT-B-284 548<br>AT-B-287 402<br>AT-B-295 245<br>AT-B-295 246<br>DE-U-1 971 830<br>DE-U-1 994 205** | |

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

Spritzversteller für Brennstoffeinspritzpumpen von Einspritzbrennkraftmaschinen.

Spritzversteller für Brennstoffeinspritzpumpen, welche mit Fliehgewichten ausgestattet sind, haben die Aufgabe, die relative Winkellage von Antriebswellen und Einspritzpumpennockenwelle in Abhängigkeit von der Drehzahl zu verändern, wobei die Fliehgewichte in Abhängigkeit von ihrer Stellung ein Kuppelorgan zwischen der Antriebswelle und der Einspritznockenwelle verstellen. Da das Antriebsdrehmoment über diese Kupplung geleitet wird, sind die Fliehgewichte nicht nur durch die Kraft einer oder mehrerer Federn belastet, sondern auch durch das durch die Kupplung durchgeleitete, für den Antrieb der Einspritzpumpennockenwelle erforderliche Drehmoment. Das für den Antrieb von ein- oder mehrzylindrigen Einspritzpumpen erforderliche Drehmoment ist aber nicht konstant, sondern davon abhängig, ob ein Pumpenelement gerade einen Fördervorgang ausführt oder nicht. Ausserdem wird das Drehmoment von der Drehzahl, der Kraftstofffördermenge, dem Durchmesser der Kraftstoffdruckleitung und von zahlreichen weiteren Parametern beeinflusst. Da der eigentliche Förderhub der Einspritzpumpe sich nur über wenige Winkelgrade erstreckt, ergibt sich zwischen dem mittleren und dem maximalen Drehmoment ein grosser Unterschied. Dies führt dazu, dass die Verstellvorrichtung eine Winkellage aufsucht, die sich aus dem mittleren Drehmoment ergibt, dass sie aber aus dieser Lage während der Wirkungsdauer des Spitzendrehmomentes verstellt bzw. rückgedrückt wird. In der zwischen den einzelnen Pumpenhüben herrschenden Freiphase sucht die Verstellvorrichtung wieder ihre Ausgangslage auf. Dieser Rückdrückung der Verstellvorrichtung muss in letzter Zeit immer mehr Beachtung gewidmet werden, da die Spitzendrücke in Einspritzsystemen immer höhere Werte bis zu 1000 bar und mehr erreicht haben. Die periodisch bei jedem Einspritzvorgang auftretende Rückdrückung in Richtung eines geringeren Verstellwinkels führt zu einer erheblichen Abnützung der kraftübertragenden und formschlüssigen Teile des Verstellmechanismus und vermindert dadurch die Genauigkeit und Zuverlässigkeit des Spritzverstellers. Ausserdem wird der Sollwert des Verstellwinkels nicht gehalten und ist in unerwünschter Weise von Einspritzdruck und Fördermenge abhängig. Man hat versucht, diese Rückdrückung zu verhindern, indem der Verstellmechanismus selbsthemmend ausgeführt wurde. Dies hat zu einer Vergrösserung der durchgeleiteten Kräfte geführt, ohne den Verschleiss zu vermindern. Weiters hat man die Rückdrückung durch das Vorsehen einer hydraulischen Dämpfung zu vermindern versucht. Auch hier war der Aufwand im Verhältnis zum Erfolg zu gross. Eine Dämpfung kann lediglich die Rückdrückung vermindern, nicht aber gänzlich ausschalten.

Die Erfindung bezieht sich nun auf einen Spritzversteller für Brennstoffeinspritzpumpen von Einspritzbrennkraftmaschinen, welcher mit Fliehgewichten ausgestattet ist, die durch wenigstens eine Feder zentripetal belastet sind und unter der Wirkung der Fliehkraft auswärtsverlagerbar geführt sind, wobei die Einspritzpumpenwelle mit der Antriebswelle drehwinkelverstellbar verbunden ist und die Fliehgewichte bei ihrer Auswärtsbewegung die Einspritzpumpenwelle relativ zum Antrieb in Drehrichtung verstellen.

Aufgabe der Erfindung ist es, die Rückdrückung der Einspritzpumpennockenwelle im Augenblick der Förderung zu unterbinden oder zumindest weitgehend zu vermindern, ohne den konstruktiven Aufwand oder die durchgeleiteten Kräfte zu vergrössern. Die Erfindung besteht hiebei im wesentlichen darin, dass die Fliehgewichte in spitzem Winkel zu Radialen, in Drehrichtung voreilend auswärtsverlagerbar geführt sind. Wenn während des Hubes eines Pumpenkolbens das Drehmoment vergrössert wird, so wirkt dies im Sinne einer kurzzeitigen Drehzahlverminderung, d.h. also im Sinne eines zentripetalen Rückdrückens der Fliehgewichte. Dadurch aber, dass die Fliehgewichte in Drehrichtung voreilend geführt sind, wird gleichzeitig durch die Trägheit der Fliehgewichte den Fliehgewichten ein auswärts gerichteter Impuls erteilt. Dem durch die Erhöhung des Drehmomentes sich ergebenden, nach innen gerichteten, auf die Fliehgewichte wirkenden Impuls wirkt der durch die Trägheit der Fliehgewichte nach aussen gerichtete Impuls entgegen, so dass beide Impulse ausgeglichen werden und die Fliehgewichte in Ruhe bleiben. Auf diese Weise wird die Ungleichförmigkeit der Drehbewegung der Pumpenwelle und ein durch eine Pendelbewegung der Fliehgewichte sich ergebender Verschleiss vermieden oder zumindest weitgehend verringert.

Gemäss der Erfindung beträgt zweckmässig der Winkel zwischen der Führungsrichtung der Fliehgewichte und der Radialen zwischen 5° und 25°, vorzugsweise 10° bis 20°. Dieser Winkel kann empirisch festgestellt werden und es wurden in den genannten Grenzen gute Ergebnisse festgestellt.

Da der Antrieb einer Einspritzpumpe eine gewisse Drehelastizität aufweist, kommt es für die Dauer der Pumpenförderung stets zu einer entsprechenden Drehverzögerung, durch welche die Fliehgewichte infolge ihrer Trägheit nach auswärts gerichtete Impulse erfahren. Eine Erhöhung des durchgeleiteten Drehmomentes bewirkt nach dem Erfindungsgedanken einerseits eine Vergrösserung der Rückdrückkraft, andererseits aber auch eine Erhöhung der Schwenkkraft nach aussen, durch die Wirkung der Trägheit der Fliehgewichte, so dass die beiden Kräfte unabhängig vom durchgeleiteten Drehmoment im Gleichgewicht bleiben. Wenn sich die auf diese Weise auf die Fliehgewichte wirkenden Kräfte nur teilweise aufheben, so kann eine Rückdrückbewegung auch gänzlich unterbunden werden, wenn die verbleibende Kraft auf den Verstellmechanismus kleiner ist als die Reibungskräfte.

Die Fliehgewichte können in Bahnen geführt sein. Üblicherweise sind aber die Fliehgewichte um Schwenkachsen schwenkbar gelagert und in diesem Fall wird gemäss der Erfindung die Bedingung, dass die Fliehgewichte in Drehrichtung voreilend auswärts verlagerbar geführt sind, dadurch erreicht, dass die Schwenkachsen unter einem von 90° abweichenden Winkel zu den durch die Längsmitte der Schwenkachsen gehenden Radialen stehen und die Normalen auf die Schwenkachsen zur Radialen in Drehrichtung schräg auswärts verlaufen.

In der Zeichnung ist die Erfindung schematisch an Hand von Ausführungsbeispielen erläutert.

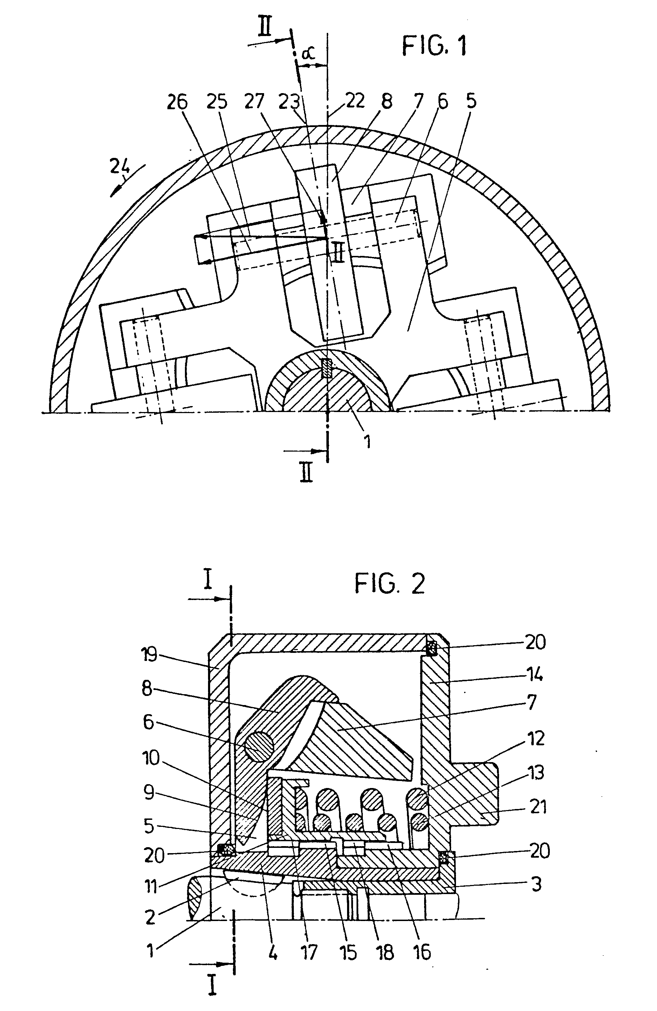

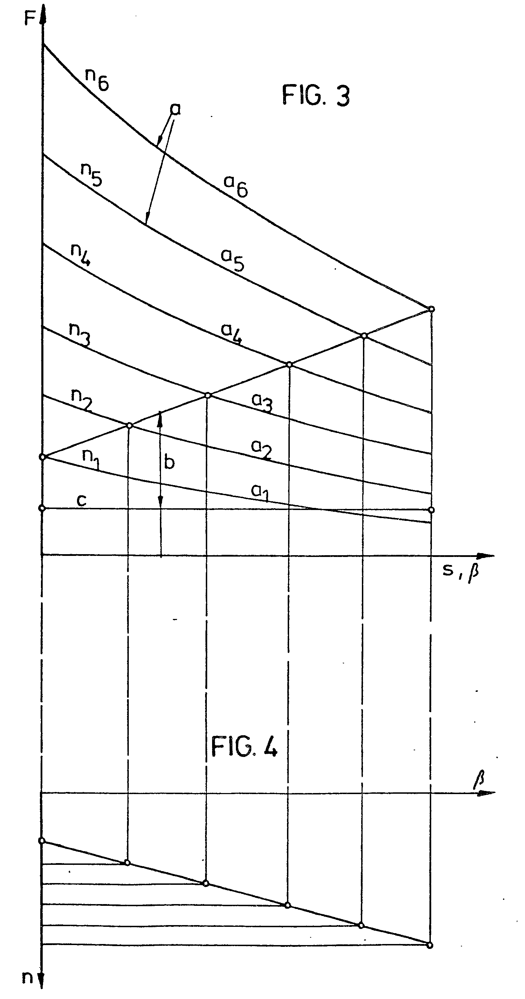

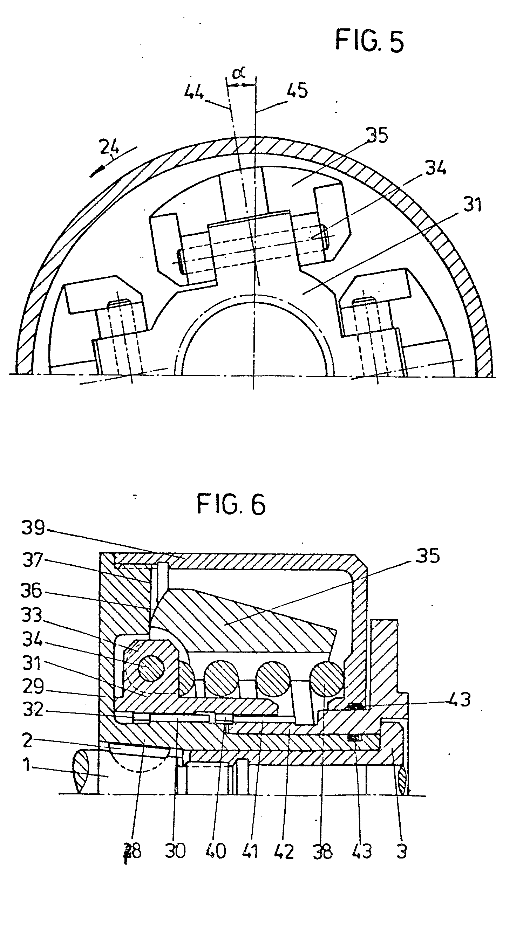

Fig. 1 und 2 zeigen einen Spritzversteller, wobei Fig. 1 einen Schnitt nach Linie I-I der Fig. 2 und Fig. 2 einen Schnitt nach Linie II-II-II der Fig. 1 darstellt. Fig. 3 und 4 zeigen Diagramme. Fig. 5 und 6 zeigen eine andere Ausführungsform eines Spritzverstellers, wobei Fig. 5 einen Querschnitt und Fig. 6 einen Längsschnitt darstellt.

Bei der Ausführungsform der Fig. 1 und 2 ist 1 die Welle der nicht dargestellten Einspritzpumpe. Auf der Welle 1 ist mittels einer Scheibenfeder 2 und einer Mutter 3 eine Nabe 4 fest angebracht, welche in ihrem linken Teil den Fliehgewichtsträger 5 aufweist. Der Fliehgewichtsträger 5 weist vier Arme mit gabelförmigen Ausnehmungen auf, in welchen über die Bolzen 6 die Fliehgewichte 7 drehbar gelagert sind. Die Bewegung der Fliehgewichte 7 wird über Daumen 8, welche an ihrem der Achse zugekehrten Teil eine Wälzkurve 9 aufweisen, auf eine Kreisringplatte 10 übertragen, welche fest auf einer Schiebemuffe 11 angebracht ist. Der Kontakt zwischen Daumen 8 und Kreisringplatte 10 wird durch eine oder mehrere Druckfedern 12, 13 aufrecht erhalten, welche zwischen Schiebemuffe 11 und einer Mitnehmerplatte 14 eingespannt sind. Die Mitnehmerplatte 14 weist einen Nabenteil auf, welcher mit seinem Innendurchmesser auf der Nabe 4 gelagert ist. Die Nabe 4 und der Nabenteil der Mitnehmerplatte 14 tragen aussen je eine Verzahnung 15 und 16, von welchen mindestens eine schraubenförmig in Art eines Steilgewindes ausgebildet ist. Die Schiebemuffe 11 weist die zu diesen Verzahnungen korrespondierenden Verzahnungen 17 und 18 auf.

Auf diese Weise bewirkt eine Verschiebung der Schiebemuffe 11 eine relative Verdrehung zwischen Nabe 4 und Mitnehmerplatte 14. An der Mitnehmerplatte 14 ist ein Gehäuse 19 befestigt. Das Gehäuse 19 ist mit Öl gefüllt und wird über Dichtringe 20 nach aussen abgedichtet. Der Antrieb erfolgt durch eine nicht dargestellte biegeelastische Kupplung über Butzen 21 an der Mitnehmerplatte.

In Abhängigkeit von der Drehzahl werden die Fliehgewichte 7 nach aussen gedrückt, wodurch bei steigender Drehzahl der Voreinspritzungswinkel vergrössert wird. Diese Fliehgewichte sind aber nicht nur durch die Federn 12 und 13 in zentripetaler Richtung belastet. Durch den Antrieb muss das für den Betrieb der Einspritzpumpe erforderliche Drehmoment auf die Einspritzpumpenwelle 1 übertragen werden und dieses Drehmoment übt über die Zähne 15, 16 eine Rückdrückkraft auf die Schiebemuffe 11 aus, welche zur Kraft der Federn 12, 13 addiert werden muss. Wenn diese Rückdrückkraft kleiner ist, können die Fliehgewichte weiter ausschwenken und wenn die Rückdrückkraft grösser ist, würden bei gleicher Drehzahl die Fliehgewichte weniger weit ausschwenken, wobei diese Unterschiede allerdings nur geringfügig sind. Wenn nun das für den Antrieb der Pumpenwelle 1 erforderliche, durch den Spritzversteller zu übertragende Drehmoment konstant wäre, so würde dies die Gleichförmigkeit des Ausschlages der Fliehgewichte nicht beeinträchtigen. Das durch den Spritzversteller zu übertragende Drehmoment ist aber nicht konstant, sondern weist bei jedem Fördervorgang, d.h. bei der Einspritzpumpe, einen starken Anstieg auf, der eine entsprechende kurzzeitige Vergrösserung der Rückdrückkraft bewirkt. Durch die unvermeidliche Elastizität des Antriebes bewirkt das vergrösserte Drehmoment aber eine starke Winkelverzögerung.

Die Bolzen 6, um welche die Fliehgewichte 7 schwenken, liegen üblicherweise unter einem Winkel von 90° zur Radialen. Wie Fig. 1 zeigt, stehen aber dieser Schwenkachsen unter einem von 90° abweichenden Winkel α zu den durch die Längsmitte der Schwenkachsen 6 gehenden Radialen 22, wobei die Normalen auf die Schwenkachsen 6 zur Radialen 22 in Drehrichtung 24 schräg auswärts verlaufen. Die Fliehgewichte schwenken somit in Richtung dieser Normalen und die Schwenkebene 23 der Fliehgewichte liegt somit nicht in der Radialen 22, sondern schliesst mit der Radialen 22 einen Winkel α ein. Durch diese Schrägstellung der Achsen sind somit die Fliehgewichte 7 in spitzem Winkel α zur Radialen 22 in Drehrichtung voreilend, auswärtsverlagerbar geführt.

Wenn bei Vergrösserung des Drehmomentes eine Winkelverzögerung auftritt, so üben bei der durch den Pfeil 24 angedeuteten Drehrichtung die Fliehgewichte infolge der Trägheit ihrer Masse eine durch den Pfeil 25 angedeutete Kraft in Umfangsrichtung aus. Diese Kraft kann nun in die Kräfte 26 und 27 zerlegt werden. Die Kraft 26 wirkt senkrecht auf die Anlageflächen des Fliehgewichtsträgers und die Kraft 27 wirkt in Schwenkrichtung (Ebene 23) der Fliehgewichte 7 nach aussen. Da die Kraft 27 im Massenmittelpunkt des Fliehgewichtes angreifend gedacht werden kann, bewirkt sie ein Drehmoment, welches das Fliehgewicht nach aussen schwenken will. Die damit verursachte Muffenschiebekraft wirkt also entgegen der Rückdrückkraft aus dem Drehmoment, die das Fliehgewicht nach innen schwenken würde. Bei entsprechender Wahl des Winkels α, um welchen die Schwenkebene 23 der Fliehgewichte gegen die Radiale 22 verdreht ist, halten sich die Rückdrückkräfte und die aus der Massenkraft 25 herrührende Schiebekraft das Gleichgewicht und eine Rückdrückung der Muffe wird unterbunden.

Im Diagramm nach Fig. 3 ist über dem Muffenweg s die Schiebekraft F aufgetragen. Bei einer bestimmten Drehzahl ergibt sich die sogenannte Pendelkurve a. In diesem Diagramm nach Fig. 3 sind für mehrere Drehzahlen $n_1$ bis $n_6$ die Pendelkurven $a_1$–$a_6$ über dem Muffenweg s bzw. über dem über das Steilgewinde auf der Muffe entsprechend gleichlaufenden Verstellwinkel β aufgetragen. Das durch den Spritzversteller durchgeleitete mittlere Antriebsdrehmoment verursacht über das Steilgewinde eine rückdrückende Schiebekraft c auf die Muffe. Addiert man zu dieser Kraft c die jeweilige Federkraft b, so erhält man – bei Vernachlässigung der Reibung – die gesamte Gegenkraft F. Die Schnittpunkte dieser gesamten Gegenkraft F mit den Pendelkurven $a_1$–$a_6$ ergeben den Zusammenhang zwischen Drehzahl n und Verstellwinkel β, der im Diagramm nach Fig. 4 dargestellt ist.

Fig. 5 und 6 zeigen einen Spritzversteller einer Bauart, bei welcher der Zusammenhang zwischen Schwenkwinkel der Fliehgewichte und Muffenweg bzw. Verstellwinkel über Wälzkurven gegeben ist, die auf den Fliehgewichten selbst angebracht sind.

Auf der Welle 1 einer nicht dargestellten Dieseleinspritzpumpe ist mit der Scheibenfeder 2 und der Mutter 3 eine Nabe 28 befestigt, welche in ihrem links dargestellten Teil eine Kreisplatte 29 aufweist und welche eine Verzahnung 30 trägt, die eine Geradverzahnung oder eine Schraubverzahnung sein kann. Eine Schiebemuffe 31 ist mit dieser Verzahnung 30 mittels einer dazu korrespondierenden Verzahnung 32 in ständigem Eingriff. An vier Armen 33 der Schiebemuffe 31 sind über Drehbolzen 34 vier Fliehgewichte 35 schwenkbar gelagert, die sich über an ihren Rücken angebrachte Wälzkurven 36 an einer Fläche 37 der Nabe abstützen. Eine Druckfeder 38 ist zwischen dem auf der Nabe 28 befestigten Gehäuse 39 und der Schiebemuffe 31 angeordnet und drückt die Muffe samt den an ihr schwenkbar gelagerten Fliehgewichten gegen die Flächen 37 der Nabe 28. Die Muffe 31 weist eine zweite Verzahnung 40 auf, die mit einer Verzahnung 41 einer Hülse 42 in ständigem Eingriff steht. Zur Abdichtung der aus dem ölgefüllten Gehäuse 39 geführten Hülse 42 dienen zwei Dichtringe 43.

Ähnlich wie bei der Ausführungsform nach Fig. 1 und 2 wird auch hier die Muffe in Abhängigkeit von Drehzahl, Federkraft und mittlerem Drehmoment eine Gleichgewichtslage einnehmen, die von der Form der Wälzkurven 36 an den Fliehgewichtsrücken bestimmt wird und die den Verstellwinkel zwischen der Nabe 28 und der Hülse 42 festlegt. Auch hier gelingt es, durch Neigung der Schwenkebene 44 der Fliehgewichte um den Winkel α zur Radialen bzw. zu der die Drehachse des Spritzverstellers beinhaltenden Ebene 45 eine bei auftretender Drehverzögerung wirkende Massenkraft im Massenmittelpunkt des Fliehgewichtes zu erhalten, welche der Rückdrückung durch das durchgeleitete Drehmoment entgegenwirkt.

Der Neigungswinkel α, der für das Gleichgewicht der Kräfte an der Muffe erforderlich ist, richtet sich nach den Parametern des Systems und liegt ebenso wie bei der Ausführungsform nach Fig. 1 und 2 zwischen 5° und 25°, vorzugsweise zwischen 10° und 20°. Durch eine unsymmetrische Ausführung der Fliehgewichte kann der zur Verfügung stehende Bauraum günstiger genützt werden. Auch eine geringere oder grössere Anzahl von Fliehgewichten ist möglich.

Eine andere Ausführung des Erfindungsgedankens wäre in der Form denkbar, dass mehrere eine Masse aufweisende Kugeln zwischen zwei mit Innenkegeln versehenen Platten durch Federkraft nach innen und über die Fliehkraft nach aussen gedrückt werden, dass diese Kugeln in einem Käfig mit gegen die Radialrichtung um den Winkel α geneigten schlitzförmigen Bahnen geführt sind und dass eine der beiden Kegelplatten bei ihrer Verschiebung über ein Steilgewinde eine Verdrehung der Nabe gegen den Mitnehmer bewirkt. Auch hier kann der Neigungswinkel α der Schlitze der Kugelführungen so ausgelegt sein, dass sich die Rückdrückkraft und die Komponente aus der Massenkraft bei der Drehverzögerung gegenseitig aufheben.

**Patentansprüche**

1. Spritzversteller für Brennstoffeinspritzpumpen von Einspritzbrennkraftmaschinen, welcher mit Fliehgewichten (7, 35) ausgestattet ist, die durch wenigstens eine Feder (12, 13, 38) zentripetal belastet sind und unter der Wirkung der Fliehkraft auswärtsverlagerbar geführt sind, wobei die Einspritzpumpenwelle (1) mit der Antriebswelle drehwinkelverstellbar verbunden ist und die Fliehgewichte (7, 35) bei ihrer Auswärtsbewegung die Einspritzpumpenwelle (1) relativ zum Antrieb in Drehrichtung verstellen, dadurch gekennzeichnet, dass die Fliehgewichte (7, 35) in spitzem Winkel (α) zur Radialen (22), in Drehrichtung voreilend, auswärtsverlagerbar geführt sind.

2. Spritzversteller nach Anspruch 1, dadurch gekennzeichnet, dass der Winkel (α) zwischen der Führungsrichtung (Führungsebene 23) der Fliehgewichte (7) und der Radialen (22) zwischen 5° und 25°, vorzugsweise 10°–20°, beträgt.

3. Spritzversteller nach Anspruch 1 oder 2, mit um Schwenkachsen schwenkbaren Fliehgewichten, dadurch gekennzeichnet, dass die Schwenkachsen unter einem von 90° abweichenden Winkel (α) zu den durch die Längsmitte der Schwenkachsen (6) gehenden Radialen (22) stehen und die Normalen auf die Schwenkachsen (6) zur Radialen (22) in Drehrichtung (24) schräg auswärts verlaufen.

**Claims**

1. Fuel injection pump timing mechanism for internal combustion engines equipped with centrifugal weights (7, 35) which are loaded centripetally to move outwards under the influence of centrifugal force, with the injection pump shaft (1) being connected with the drive shaft at an adjustable angle of rotation and with the centrifugal weights (7, 35) adjusting the injection pump shaft (1) in the direction of rotation with regard to the drive during their outward movement, characterized in that the centrifugal weights (7, 35) are guided so as to be movable outwards at an acute angle (α) to the radial direction (22) leading in the direction of rotation.

2. Fuel injection pump timing mechanism according to claim 1, in which the angle (α) between the guide direction (guiding plane 23) of the centrifugal weights (7) and the radial direction (22) is between 5° and 25°, preferably 10°–20°.

3. Fuel injection pump timing mechanism according to any of Claims 1 or 2 with centrifugal weights being journalled around pivoting axes, in which the pivoting axes are mounted at an angle (α) different from 90° with regard to radials (22) passing through the longitudinal center of the pivoting axes (6) and that lines perpendicular to the pivoting axes (6) are inclined outwardly to the radial direction (22) in the direction of rotation (24).

**Revendications**

1. Dispositif pour faire varier l'instant d'injection d'une pompe d'injection de carburant pour moteurs à combustion interne à injection, qui est équipé de masselottes centrifuges (7, 35) qui sont sollicitées dans le sens centripète par au moins un ressort (12, 13, 38) et qui sont guidées d'une façon qui leur permet de se déplacer vers l'extérieur sous l'action de la force centrifuge, l'arbre (1) de la pompe d'injection étant relié à l'arbre d'entraînement avec possibilité de modification de l'angle de rotation et les masselottes centrifuges (7, 35) décalant l'arbre (1) de la pompe d'injection par rapport à l'entraînement dans le sens de la rotation lors de leur mouvement vers l'extérieur, caractérisé en ce que les masselottes centrifuges (7, 35) sont guidées de façon à se déplacer vers l'extérieur en prenant de l'avance dans le sens de la rotation, avec un angle aigu (α) par rapport aux rayons (22).

2. Dispositif pour faire varier l'instant d'injection suivant la revendication 1, caractérisé en ce que l'angle (α) formé entre la direction de guidage (plan de guidage 23) des masselottes centrifuges (7) et les rayons (22) est compris entre 5° et 25°, de préférence entre 10° et 20°.

3. Dispositif pour faire varier l'instant d'injection suivant l'une des revendications 1 et 2, comprenant des masselottes centrifuges qui peuvent pivoter autour d'axes de pivotement, caractérisé en ce que les axes de pivotement forment un angle (α) différent de 90° avec les rayons (22) qui passent par le milieu de la longueur des axes de pivotement (6), et en ce que les normales aux axes de pivotement (6) s'étendent vers l'extérieur obliquement par rapport aux rayons (22) dans le sens de la rotation (24).

FIG. 1

FIG. 2

FIG. 3

FIG. 4

# FIG. 5

# FIG. 6